# EUROPEAN PATENT APPLICATION

(11) **EP 3 915 375 A1**
(43) Date of publication of application: **01.12.2021**
(21) Application number: 20176679.7
(22) Date of filing: 26.05.2020
(51) Int. Cl.: A01N 59/06, A01N 59/16, A01P 21/00

(54) **IMPROVEMENTS IN FOLIAR FERTILIZERS**

(71) Applicant: Everris International B.V., 6422 PD Heerlen (NL)
(72) Inventor: SEH, Cheng Siang, 6422 PD Heerlen (NL); VRIESEMA, Hein, 6422 PD Heerlen (NL)
(74) Representative: Hoyng Rokh Monegier B.V.

(57) **Abstract**

The present invention relates to a foliar fertilizer composition comprising at least one fertilizer and one or more of sun-blocking compounds chosen from the group of kaolin, bentonite, calcium carbonate and organic compounds that block UV radiation. Preferably, the sun-blocking compound is an organic compound that blocks UV radiation, and may be selected from the group of benzophenone type compounds, benzimidazole type compounds, hydroxybenzoyl benzoate type compounds, benzotriazol type compounds, cinnamido type compounds, flavonoids, antioxidants or lignosulfonates.

## Description

### I. Field of the Invention

The invention relates to improvements in foliar fertilizers, methods and kits of parts relating to such improvement.

### II. Description of the Background Art

Foliar fertilizers are fertilizers that are designed to be applied directly to the leaves of a plant. It is common for crops to receive foliar fertilizers on a regular basis, for instance to boost their growth or to correct nutrient deficiencies. Foliar application is done with spraying a mist of fine water droplets through small spray nozzles.

Typically, foliar applied fertilizers are soluble in water or dispersed in such a good way that the spraying nozzles are not blocked. Furthermore, the concentration of these fertilizers is adopted to the crop/spraying conditions and type of fertilizer. Foliar fertilizers are well known, and for example commercially available from ICL specialty fertilizers.

Foliar fertilizers are regularly used on crop, depending on the nutrient status of the soil. Per foliar spray, a suitable amount of fertilizer is dissolved in water, while using about 100 L water per hectare or more. The farmer generally dissolves the fertilizer in a spray tank.

As foliar fertilizers are regularly used, it is not uncommon to mix in the spray tank further actives, such as pesticides like fungicides, insecticides or plant growth regulators and the like. Yet, in view of the variety of other actives, it is generally not useful to supply fixed mixtures of fertilizer and further actives.

Yet, an improved fertilizer composition may be advantageous for the farmer.

### III. Brief Summary of the invention

The present invention provides a foliar fertilizer composition comprising at least one fertilizer and one or more of sun-blocking compounds chosen from the group of kaolin, bentonite, calcium carbonate and organic compounds that block UV radiation.

Photosynthesis is the basic feeding mechanism that determines the growth of plants. In photosynthesis, the plant leaves absorb sun rays that enable water and carbon dioxide to form sugars and oxygen. The oxygen is provided to the outer medium, while the formed sugars provide a nutrient source for the plant leading to plant development and growth.

Although sun rays are essential for the plants, high temperatures and sunburn, on the other hand, can cause the deceleration of photosynthesis, chlorophyll and protein synthesis, nutrient element assimilation and transportation of nutrient elements like calcium and thus, it blocks the development of the plant. Moreover, ultraviolet (UV) and infrared (IR) sun rays can have harmful effects on plants, fruits, and vegetables, such as deterioration of the cell wall and structure while creating biological and bio-chemical changes.

It is therefore desirable, in particular during hot weather or summer season, to provide the plants with a fertilizer together with a sunlight blocking compound that can protect the plant from damaging UV rays. Furthermore, a temperature higher than about 40 °C generally deteriorates plant health, and it may be useful to block IR sun rays in order keep the plant cooler, reduce stress and enable the plant to maintain normal photosynthesis.

Several sun protection agents are known.

Engelhard Surround® WP Crop protectant is a kaolin powder that can be applied in the form of a spray to form a barrier film that protects against sunburn. It is applied by adding the kaolin to water in a recirculating spraying tank, wherein it is mixed thoroughly and constantly to avoid clogging of the nozzles.

US 6,069,112 describes a method for preventing sunburn without diminishing photosynthesis by applying an effective amount of a finely divided particulate material, comprising at least 25% by weight of calcined kaolin.

According to the present invention, the foliar fertilizers can be mixed with such plant protecting agents.

However, a disadvantage of using for example kaolin powder as sun blocking compound, or another solid component like titanium dioxide, in the form of a spray is that it requires spraying tanks with continuous mixing to prevent precipitation of the kaolin and clogging of the spray nozzles.

A further disadvantage of the known sun blocking compounds is that they are not water soluble and end up forming a visible layer on the leafage or fruits. If these layers cannot be washed off easily, the consumer dislikes the white appearance.

On the other hand, it is also not desirable to provide sun blocking compounds to the plants that are quickly washed away due to rainfall.

WO 2019/098959 describes a sun protection composition prepared in the form of dispersion of titanium dioxide. The composition further comprises CaO, boron and amino acids, and may contain about 10 % of fertilizer. The use of titanium dioxide as sun-blocking compound in foliar application has the disadvantage that it is a highly reflective compound that not only blocks harmful UV and/or IR radiation but also a significant amount of visible radiation. Another disadvantage of titanium dioxide is that it leaves stains on the leafage. Hence, according the present invention, titanium dioxide is not used as sun blocking compound.

Preferably, a UV and/or IR blocking compound is compatible with the fertilizer solution and soluble or colloidally soluble in the spray liquid that is applied to plants.

It is a further object of the invention to provide a foliar fertilizer that can provide UV protection without significantly compromising the common application methods for foliar spray fertilizers. Commonly, farmers do not have spray equipment with a continuous stirring or mixing device; hence, the foliar fertilizer with blocking compound can be dissolved, and does not require a continuously mixing during application in the field.

According to a preferred embodiment of the invention, a foliar fertilizer composition is provided that comprises at least one fertilizer and one or more of sun-blocking compounds selected from the group of organic compounds that block UV radiation.

Preferably, the organic sun-blocking compounds are water soluble, or dispersible such that no continuous mixing in the spray tank is necessary.

In a further preferred embodiment, the one or more organic compounds that block UV radiation are one or more of benzophenone type compounds, benzimidazole type compounds, hydroxybenzoyl benzoate type compounds, benzotriazole type compounds, cinnamido type compounds, flavonoids, anti-oxidants and/or lignosulfonates.

The invention furthermore relates to the use of a compound selected from the group of benzophenone type compounds, benzimidazole type compounds, hydroxybenzoyl benzoate type compounds, benzotriazole type compounds, cinnamido type compounds, flavonoids, anti-oxidants, lignosulfonates as sun-blocking compound for plants, used in a foliar application.

The invention furthermore relates to a kit of parts, comprising as one part at least one fertilizer, and in another part a sun-blocking agent, both present in effective amounts if used in conformity with the instructions for the kit-of-parts in a spray solution for foliar spray.

The invention furthermore relates to a method for producing plants or seeds or fruits therefrom, including crops, fruits and/or perennials, while applying foliar fertilizer and protecting said plants or seeds or fruits against UV radiation comprising: providing a composition as described above, or the kits of parts as described, dispersing or solubilizing the composition or parts of the kit in water to form a spray solution, optionally adding additional components, and applying the spray solution directly to the plants in a foliar application.

### IV. Detailed description of the invention

The present invention provides foliar fertilizer compositions comprising at least one fertilizer and one or more of sun-blocking compounds chosen from the group of kaolin, bentonite, calcium carbonate and organic compounds that block UV radiation.

Sun-blocking herein refers to the absorption or reflection of UV radiation.

### Fertilizer compositions

The fertilizer may comprise NPK fertilizers. NPK fertilizers herein is referred to fertilizers that comprise nitrogen, phosphorous, and/or potassium as macronutrients. Yet, one or two of NPK may be 'zero', meaning that the fertilizer contains only nitrogen, phosphorus or potassium. Nitrogen is often supplied as urea, ammonium nitrate or mixtures thereof; phosphorous as potassium phosphate or ammonium phosphate; potassium as potassium phosphate, potassium sulphate or potassium nitrate.

As further macronutrient, sulfur may be applied; sulfur can be applied as sulfur oxides, potassium sulphate and the like.

The skilled person is aware of different forms of NPKS foliar fertilizers wherein nitrogen, phosphorous, potassium and/or sulfur may be present or absent, and if present, can be present in different amounts.

Other macronutrients that are regularly used comprise calcium and/or magnesium. If calcium salts are used, it is preferred not to have sulphate in the remainder of the composition, as that will cause precipitation of calcium sulfate salts.

Preferably, the foliar fertilizer comprises micronutrients like iron, manganese, boron, copper, molybdenum and/or zinc. These micronutrients generally are present as salts that are well dissolvable in water; boron may be present as boric acid. Such salts may be chelates.

In a further preferred embodiment, the foliar fertilizer comprises a metal chelate as main component. For example, iron EDTA or manganese EDTA complexes are available as foliar fertilizer to specifically treat certain conditions of plants. The foliar fertilizer may only contain one or more micronutrients.

The fertilizer generally is available as readily dissolvable powder. In another embodiment, the fertilizer is available as concentrated solution.

The foliar fertilizer may comprise adjuvants to improve solvability, adherence to the leaves, penetration through the leave and/or stability in the water phase. Such adjuvants generally are emulsifiers or dispersants. Further adjuvants are organic acids to adjust the pH of the spray solution, and preclude too basic pH that could cause precipitation of certain metals. In some instances, biostimulants like seaweed may be added to the foliar fertilizer composition.

### Sun-blocking compounds

In a preferred embodiment of according to the invention, the sun-blocking compound is an organic compound that can block UV radiation by absorbing or reflecting UV radiation.

In one preferred embodiment, the sun blocking compound is selected from the group of benzophenone type compounds, benzimidazole type compounds, hydroxybenzoyl benzoate type compounds, benzotriazol type compounds, cinnamido type compounds, flavonoids, antioxidants and lignosulfonates. Such organic compounds can be applied in relatively low amounts to be effective.

Preferably, the sun blocking compound is selected from water soluble type compounds comprising an ionic group and/or an oligo-ethoxylate group. This has the advantage that the compound is dissolved in the spray tank, and that the compound is evenly spread over the leaves. The oligo-ethoxylate group can have for example 3-20 ethoxylate groups. Antioxidants may not directly absorb UV light, but decrease damage caused by UV light.

Suitable examples, which represent preferred compounds for use according the invention include benzophenone type compounds such as 2,2'-dihydroxy-4,4'-dimethoxybenzophenone-5,5'-bis(sodium sulfonate) and disodium-2,2'-dihydroxy-4,4'-dimethoxy-5,5'-disulfobenzophenone.

Suitable examples, which represent preferred compounds for use according the invention include benzimidazole compounds include 2-phenyl-1H-benzimidazole-5-sulphonic acid, sodium phenylbenzimidazole sulfonate, and the triethanolamine (TEA) salt of phenylbenzimidazole sulfonic acid.

Suitable examples, which represent preferred compounds for use according the invention include benzylbenzoate compounds include for example diethylamino hydroxybenzoyl hexyl benzoate.

Suitable examples, which represent preferred compounds for use according the invention include benzotriazol compounds include for example sodium benzotriazolyl butylphenol sulfonate.

Suitable examples, which represent preferred compounds for use according the invention include cinnamido compounds for example include cinnamidopropyl trimethyl ammonium chloride.

Suitable examples, which represent preferred compounds for use according the invention include flavonoids including tannins, epigallocatechin-3-gallate, naringenin and the salt species of coumaric acid, ferulic acid or caffeic acid.

Suitable examples, which represent preferred compounds for use according the invention include lignosulfonates which are known water soluble UV blocking compounds of varying chemistry. Suitable lignosulfonates include ammonium-lignosulphoate, calcium-lignosulphonate, iron-lignosulphonate, potassium-lignosulphonate, sodium-lignosulphonate, and magnesium-lignosulphonate.

Suitable examples, which represent preferred compounds for use according the invention include antioxidants including ascorbic acid, propyl gallate and sodium erythorbate.

The invention therefore also is related to the use of a compound selected from the group of ionic benzophenone type compounds, ionic benzimidazole type compounds, ionic benzoyl benzoate type compounds, ionic benzotriazol type compounds, ionic cinnamido type compounds, water soluble flavonoids, anti-oxidants or lignosulfonates as sun blocking compound for plants, used in a foliar application.

In another embodiment of the present invention, the sun-blocking compound may be selected from one or more kaolin, bentonite, or calcium carbonate.

Sunblock formulations of this kind are known in the art, like for example Engelhard Surround® WP Crop protectant, which is a kaolin powder that can be applied in the form of a spray to form a barrier film that protects against sunburn. US 6,069,112 describes a method for preventing sunburn without diminishing photosynthesis by applying an effective amount of a finely divided particulate material, comprising at least 25% by weight of calcined kaolin.

Such inorganic sun-blocking compounds can be used in admixture with emulsifiers and/or dispersant that also have film forming properties on the leaves, such that the inorganic materials remain for a longer period on the leaves.

In a preferred embodiment, the foliar fertilizer composition also comprises one or more sun-blocking compounds that are IR reflecting or IR absorbing compounds.

### Other components

The composition for applying as foliar spray further may comprise other components, like for example a calcium source, a boron source, plant growth regulators (PGRs) like abscisic acid, known to aid a plant in resisting drought stress, or biostimulants, like for instance seaweed extracts.

Such other components can be supplied as part of the fertilizer, sunblock agent, or can be supplied in a separate container as a kit of parts.

### Formulation

The foliar fertilizer composition of the present invention, comprising at least one fertilizer and one or more of sun-blocking compounds can be provided in varying forms.

Typically, the foliar fertilizer composition contains N, P and/or K in an amount of about 1 to about 5 kg/ha nutrient. The fertilizer may also contain only 'micronutrients' like iron, manganese, or mixtures of micronutrients, in an amount of about 0.01 to about 5 kg/ha. The fertilizer may also contain both macro and micro-nutrients.

In a preferred embodiment, the fertilizer contains NPK in an amount of about 1 to about 5 kg/ha, wherein one or two of NPK may be zero.

Preferably, the foliar fertilizer composition is provided as granular or powdery product, preferably powdery, with good dissolving properties comprising both the fertilizer and the sun-blocking compound.

The foliar fertilizer composition may also comprise anti-caking agents and/or anti-dust agents.

In another preferred embodiment, the foliar fertilizer composition comprises either one, or both compounds in concentrated liquid form.

The foliar fertilizer composition according to the present invention can also be provided as kit-of parts. Such kit of parts comprises as one part at least one fertilizer and in another part the sun-blocking agent, comprising one or more sun-blocking compounds, both parts present in effective amounts if used in conformity with the instructions for the kit-of-parts in a spray solution for foliar spray.

The kit of parts preferably comprises instructions to combine said parts in one foliar spray formulation.

The foliar fertilizer composition of the present invention can be packed in paper or plastic containers like bags, boxes or the like. Suitable size includes 1 kg, 2 kg, 5 kg, 10 kg, 15 kg, 20 kg or 25 kg bags or containers. The kit-of-parts contains at least two containers, preferably in a size that reflect the relative portion of each component to be used in the tank mix.

### Spray solutions

The composition according to the present invention is applied as foliar spray to plants. Such plants may be broad acre crops, perennials, trees like fruit trees, and the like. Furthermore, foliar applications are also used for ornamental crops and for grass applications.

Suitable broad acre crops include tuber or root crops, cereals, oil crops and other crops. Suitable tuber or root crops include potatoes or sugar beet. Suitable cereals include maize, rice, wheat, barley, rye and grain. Suitable oil crops include soybean, sunflower, rapeseed or peanut. Other crops include clover, cotton or mustard. Further crops comprise vegetable crops.

Suitable trees include fruit trees like stone fruit trees (nectarine, cherry, plum and the like), apple and pear, oil palm, grapes and citrus.

The amount of spray is generally about 50 L per hectare or higher, such as about 100 L to about 2000 L/ha, preferably about 100 to about 1000 L/ha, like for example between about 100 and about 400 L/ha.

The amount of fertilizer per hectare generally is about 1 to about 5 kg, and the fertilizer therefore preferably is present in the spray solution in an amount of about 0.1 to about 2.0 wt%.

The spray solution comprises the sun-blocking compound in an effective amount.

An effective amount of the sunblock compound may depend on the climate and area in the world where the composition is to be applied. It may be preferable to have a relatively low amount of sunblock, causing some - even though not complete - protection. In certain areas, heat or sunburn is not always predictable, and e.g. about 30% less sunburn, or about 50% protection can be very useful, while lowering application costs.

Generally, for inorganic sun-blocking compounds, the amount will be about 6 kg per ha to about 50 kg/ha, preferably about 10 kg/ha or more. Preferably, about 40 kg or less will be used.

Organic sun-blocking compounds can be used in substantially lower amounts, like for example about 5 kg/ha or less, preferably about 3 kg/ha or less, and even more preferably about 1 kg/ha or less. Effective amounts can comprise about 0.01 kg/ha or more, like for example about 0.1 kg/ha or more.

The spray solution may contain fungicides, insecticides, pesticides, PGRs, biostimulants or other active components, used in amounts as prescribed by the supplier. Generally, these other active components are mixed in the spray tank, before, together with or after dissolution of the fertilizer composition of the present invention. Biostimulants for example can be seaweed extracts. A suitable PGR can be abscisic acid, which is known to be protect a plant to draught stress.

### Methods for growing plants, (crops, fruits and/or trees)

A method for producing plants or seeds or fruits therefrom, including crops, fruits and/or perennials, while applying foliar fertilizer and protecting said plants or seeds or fruits against UV radiation is provided. The method comprises providing one or more of the compositions according the present invention as described above, dissolving or dispersing the composition in water to form a spray solution, optionally adding additional components to the spray solution and applying the spray solution directly to the plants, crops, fruits and/or trees in a foliar application.

The sun-blocking compound and fertilizer may optionally be mixed with further components such as fungicides, insecticides, pesticides, PGRs, biostimulants, vitamins, or other active components, used in amounts as prescribed by the supplier. Generally, these other active components are mixed in the spray tank, before, together with or after dissolution of the fertilizer composition of the present invention.

In a preferred embodiment, the spray solution is used in about 50L to about 2000L per hectare, preferably about 100L to about 1000L per hectare

In another preferred embodiment, the sun-blocking compound is an organic compound and used in an amount of about 0.01 kg/ha to about 2 kg/ha.

Preferably, the fertilizer comprises at least N, P, or K and the fertilizer is preferably used in an amount of between about 1 and about 5 kg/ha, preferably about 2 to about 4 kg/ha.

The method may further comprise harvesting the plants, seeds or fruits.

When applying the foliar spray to the plants, it is advantageous to spray during cloudy weather conditions or in the evening to allow proper absorption of the spray compounds in the leaves or fruits and to spray until near-drip coverage.

## Claims

1. A foliar fertilizer composition comprising at least one fertilizer and one or more of sun-blocking compounds chosen from the group of kaolin, bentonite, calcium carbonate and organic compounds that block UV radiation.

2. The foliar fertilizer composition of claim 1, wherein the sun-blocking compound is an organic compound that blocks UV radiation.

3. The foliar fertilizer composition of claim 2, wherein the sun-blocking compound is selected from the group of benzophenone type compounds, benzimidazole type compounds, hydroxybenzoyl benzoate type compounds, benzotriazol type compounds, cinnamido type compounds, flavonoids, antioxidants or lignosulfonates.

4. The foliar fertilizer composition of any of claims 2 or 3, wherein the sun-blocking compound is a water-soluble compound comprising an ionic or oligo-ethoxylate group.

5. The foliar fertilizer composition of claim 4, wherein the sun-blocking compound is selected from 2,2'-dihydroxy-4,4'-dimethoxybenzophenone-5,5'-bis(sodium sulfonate), disodium-2,2'-dihydroxy-4,4'-dimethoxy-5,5'-disulfobenzophenone, 2-phenyl-1H-benzimidazole-5-sulphonic acid, sodium phenylbenzimidazole sulfonate, , potassium phenylbenzimidazole sulfonate the triethanolamine (TEA) salt of phenylbenzimidazole sulfonic acid, diethylamino hydroxybenzoyl hexyl benzoate, sodium benzotriazolyl butylphenol sulfonate, cinnamidopropyl trimethyl ammonium chloride, flavonoid like tannins or naringenin, anti-oxidants like include ascorbic acid, propyl gallate or lignosulfonates like ammonium-lignosulphoate, calcium-lignosulphonate, iron-lignosulphonate, potassium-lignosulphonate, sodium-lignosulphonate, and magnesium-lignosulphonate.

6. The foliar fertilizer according to any one of claims 1-5, wherein the fertilizer contains NPK macronutrients.

7. The foliar fertilizer according to any one of claims 1-6, wherein the fertilizer contains micronutrients.

8. Use of a compound selected from the group of
(i) benzophenone type compounds such as 2,2'-dihydroxy-4,4'-dimethoxybenzophenone-5,5'-bis(sodium sulfonate) and disodium-2,2'-dihydroxy-4,4' -dimethoxy-5,5' -disulfobenzophenone;
(ii) benzimidazole compounds such as 2-phenyl-1H-benzimidazole-5-sulphonic acid, sodium phenylbenzimidazole sulfonate, and the triethanolamine (TEA) salt of phenylbenzimidazole sulfonic acid;
(iii) benzylbenzoate compounds such as diethylamino hydroxybenzoyl hexyl benzoate.
(iv) benzotriazol compounds such as sodium benzotriazolyl butylphenol sulfonate.
(v) cinnamido compounds such as cinnamidopropyl trimethyl ammonium chloride.
(vi) flavonoids such as tannins, epigallocatechin-3-gallate, naringenin and the salt species of coumaric acid, ferulic acid or caffeic acid;
(vii) lignosulfonates such as ammonium-lignosulphonate, calcium-lignosulphonate, iron-lignosulphonate, potassium-lignosulphonate, sodium-lignosulphonate, and magnesium-lignosulphonate;
(viii) antioxidants such as ascorbic acid, propyl gallate and sodium erythorbate. as sun-blocking compound for plants, used in a foliar application.

9. Kit of parts, comprising as one part at least one fertilizer, and in another part a sun-blocking agent, both present in effective amounts if used in conformity with the instructions for the kit-of-parts in a spray solution for foliar spray.

10. Method for producing plants or seeds or fruits therefrom, including crops, fruits and/or perennials, while applying foliar fertilizer and protecting said plants or seeds or fruits against UV radiation comprising:
a. providing a composition according to any one of claims 1 - 7 or the kits of parts of claim 9;
b. dispersing or dissolving the composition or parts of the kit in water to form a spray solution;
c. optionally adding additional components;
d. applying the spray solution directly to the plants in a foliar application.

11. Method according to claim 10, wherein the spray solution is used in about 50L to about 2000L per hectare, preferably about 100L to about 1000L per hectare.

12. Method according to ay one of claims 10 - 11, wherein the sun-blocking compound is an organic compound, used in an amount of about 0.01 kg/ha to about 2 kg/ha.

13. Method according to any one of claims 10 - 12, wherein the fertilizer comprises at least N, P or K, and the fertilizer is used in an amount of between about 1 and about 5 kg/ha, preferably about 2 to about 4 kg/ha.

14. Method according to any one of claims 10 - 13, wherein the additional compound of step (c) is at least one of a fungicide, insecticide, pesticide, plant growth regulator, or biostimulant.

15. Method according to any one of claims 10-14, wherein the method further comprises step e) harvesting the plants or seeds or fruits.
